Europäisches Patentamt

European Patent Office

Office européen des brevets

(19)

(11) EP 0 844 460 A2

(12) EUROPÄISCHE PATENTANMELDUNG

(43) Veröffentlichungstag:
27.05.1998 Patentblatt 1998/22

(51) Int. Cl.$^6$: G01C 9/20, G01C 9/06

(21) Anmeldenummer: 97120415.1

(22) Anmeldetag: 21.11.1997

(84) Benannte Vertragsstaaten:
AT BE CH DE DK ES FI FR GB GR IE IT LI LU MC
NL PT SE
Benannte Erstreckungsstaaten:
AL LT LV MK RO SI

(30) Priorität: 21.11.1996 DE 19648188

(71) Anmelder:
f+g megamos Sicherheitselektronik GmbH
51674 Wiehl (DE)

(72) Erfinder: Lindenberg, Uwe
58239 Schwerte (DE)

(74) Vertreter: Cohausz & Florack
Patentanwälte
Kanzlerstrasse 8a
40472 Düsseldorf (DE)

(54) Vorrichtung zur Bestimmung des Neigungswinkels einer Bezugsebene eines Gegenstandes

(57) Die Erfindung betrifft eine Vorrichtung zur Bestimmung des Neigungswinkels ($\alpha$) einer Bezugsebene (E1) eines Gegenstandes, insbesondere eines Kraftfahrzeuges, gegenüber einer Referenzebene. Um eine einfache Bestimmung des Neigungswinkels zu ermöglichen, sieht die Erfindung vor, daß die Vorrichtung aus einem gegenüber dem Gegenstand ortsfestes Gehäuse (G) besteht, welches zwei lichtdurchlässige Medien (M1,M2) mit unterschiedlichen Brechzahlen (n1,n2) einschließt, die durch eine neigungsabhängige Grenzschicht (E2) voneinander getrennt sind, und aus einer Lichtquelle (L) zur Erzeugung eines die Grenzschicht (E2) passierenden Lichtstrahls, welcher in einer relativ zu der Bezugsebene (E1) festgelegten Richtung abgestrahlt wird, sowie aus einer Auswerteeinheit zur Erfassung der Auslenkung ($\Delta$s) des Lichtstrahls nach dessen Durchgang durch die Grenzschicht (E2) und zur Bestimmung des Neigungswinkels ($\alpha$) daraus.

Fig. 3

EP 0 844 460 A2

**Beschreibung**

Die Erfindung betrifft eine Vorrichtung zur Bestimmung des Neigungswinkels einer Bezugsebene eines Gegenstandes, insbesondere eines Kraftfahrzeuges, gegenüber einer Referenzebene,.

Die Möglichkeit zur Bestimmung des Neigungswinkels der Bezugsebene eines Gegenstandes kann von vielfachem Nutzen sein.

Insbesondere kann bei Kenntnis des Neigungswinkels der Bezugsebene eines Kraftfahrzeuges auf einfache Weise ein Diebstahlversuch des Fahrzeugs oder die Demontage der Reifen mittels Aufbocken der Karosserie entdeckt werden.

Es ist Aufgabe der Erfindung, eine Vorrichtung zu schaffen, mit der eine einfache Bestimmung des Neigungswinkels einer Bezugsebene eines Gegenstandes ermöglicht wird.

Diese Aufgabe wird für eine Vorrichtung zur Bestimmung des Neigungswinkels einer Bezugsebene eines Gegenstandes, insbesondere eines Kraftfahrzeuges, gegenüber einer Referenzebene, erfindungsgemäß dadurch gelöst, daß die Vorrichtung ein gegenüber dem Gegenstand ortsfestes Gehäuse umfaßt, welches zwei lichtdurchlässige Medien mit unterschiedlichen Brechzahlen einschließt, die durch eine neigungsabhängige Grenzschicht voneinander getrennt sind, sowie eine Lichtquelle zur Erzeugung eines die Grenzschicht passierenden Lichtstrahls, welcher in einer relativ zu der Bezugsebene festgelegten Richtung abgestrahlt wird, und eine Auswerteeinheit zur Erfassung der Auslenkung des Lichtstrahls nach dessen Durchgang durch die Grenzschicht und zur Bestimmung des Neigungswinkels daraus.

Die erfindungsgemäße Vorrichtung geht von den bekannten Gesetzmäßigkeiten zur Brechung von Licht an einer Grenzschichten zwischen zwei Medien aus. Ein Lichtstrahl, von dem ein Bruchteil von einem ersten Medium mit einer ersten Brechzahl in ein zweites Medium mit einer zweiten Brechzahl übergeht, wird demnach an der Grenzschicht zwischen den beiden Medien mit funktioneller Abhängigkeit vom Einfallswinkel an der Grenzschicht abgelenkt. Dementsprechend trifft der Lichtstrahl auf eine Fläche auf der der Lichtquelle abgewandten Seite des zweiten Mediums, die wie die Lichtquelle relativ zu dem bewegten Gegenstand ortsfest ist, an unterschiedlichen Punkten auf. Aus der Differenz zwischen zwei Auftreffpunkten kann dann der Neigungswinkel gegenüber der Referenzlage bzw. zwischen zwei unterschiedlich stark geneigten Lagen des Gegenstandes bestimmt werden.

Ein Vorteil der erfindungsgemäßen Vorrichtung besteht darin, daß der Temperaturkoeffizient der Meßanordnung bei geeignet gewählten Medien vernachlässigbar ist. Zudem ist die Vorrichtung langzeitstabil, da es zu keiner systembedingten Alterung der Detektoreigenschaften bei der Erfassung der Auslenkung des Lichtstrahls kommt. Schließlich ist durch eine geeignete Konstruktion der Vorrichtung die Winkelauflösung beliebig realisierbar.

Bevorzugte Ausführungsformen gehen aus den Unteransprüchen hervor.

Für den Fall, daß der Lichtstrahl die Grenzschicht in nicht-geneigtem Zustand der Bezugsebene lotrecht passiert, kann die Bestimmung des Neigungswinkels der Bezugsebene des Gegenstandes in der Auswerteeinheit beispielsweise gemäß Anspruch 2 durch Berechnung anhand der folgenden Formel, die sich aus dem Brechungsgesetz und Geometrieüberlegungen ergibt, erfolgen:

$$\Delta s = m * \tan\left(\alpha - \arcsin\left(\frac{n_1 1}{n_2} * \sin \alpha\right)\right).$$

Besonders vorteilhaft ist die Verwendung von Luft als erstes Medium und einer Flüssigkeit als zweites Medium. In diesem Fall ist dann ein hermetisch geschlossenes Gehäuse zur Aufnahme der zwei Medien angebracht. Hierfür eignet sich beispielsweise ein Glasbehälter. Ein solches geschlossenes Gehäuse ermöglicht auch eine unkritische Handhabung der Vorrichtung.

Für einer alternativen Ausführungsform ist die Verwendung eines festen zweiten Mediums vorgesehen, wobei die Grenzschicht zwischen den Medien ebenfalls neigungsabhängig sein muß, was beispielsweise durch eine Lagerung des zweiten Mediums mit entsprechenden Freiheitsgraden erreicht werden kann. Der Vorteil eines festen Mediums besteht darin, daß die Oberfläche der Grenzschicht, anders als bei der Verwendung einer Flüssigkeit, stabil ist. Auch mit einem solchen festen Medium ist eine unkritische Handhabung sichergestellt.

Als Lichtquelle eignet sich beispielsweise eine low cost LED mit Linse oder eine Laserdiode, da diese Lichtquellen punktförmig sind und einen nicht divergierenden Lichtstrahl erzeugen. Für die Verwendung der Vorrichtung bzw. die Anwendung des Verfahrens ist ein solcher nicht divergierender Lichtstrahl von Vorteil, da er eine exakte Positionsbestimmung der verschiedenen Auftreffpunkte erleichtert, aufgrund derer der Neigungswinkel berechnet wird. Es existieren jedoch Detektoren, die den optischen Schwerpunkt eines auftreffenden divergierenden Lichtstrahls ermitteln, so daß ein nicht divergierender Lichtstrahl keine zwingende Voraussetzung ist.

Ein optoelektronischer Detektor als Teil der Auzswerteeinheit für die Erfassung der Auftreffpunkte des Lichtstrahls auf einer Fläche kann beispielsweise eine Lateraleffektdiode sein, mit der die Position des Auftreffpunktes eines ankommenden Lichtstrahls bestimmt werden kann.

Von besonderem Vorteil ist hierbei eine zweidimensional erfassende Fotodiode, da dann aufgrund der Verschiebung des Auftreffpunktes des Lichtstrahl in Richtung von zwei definierten Koordinatenachsen der Erfassungsebene ausgehend von einem Ausgangsauftreffpunkt mit einer einzigen Lichtquelle der Neigungswinkel des Gegenstandes in allen Richtungen bestimmt werden kann.

Werden zudem Steuermittel vorgesehen, die eine spontane Erfassung ermöglichen, so kann ein Großteil der Energie eingespart werden, die bei einer ständigen Erfassung erforderlich ist.

Die Erfindung wird im folgenden anhand von Zeichnungen näher erläutert. Dabei zeigt:

Fig. 1:    eine schematische Veranschaulichung der erfindungsgemäß genutzten Brechungsgesetzmäßigkeiten eines Lichtstrahls,

Fig. 2:    die Änderung eines Auftreffpunktes als Funktion des Neigungswinkels $\alpha$, und

Fig. 3:    ein Ausführungsbeispiel einer Vorrichtung gemäß der Erfindung.

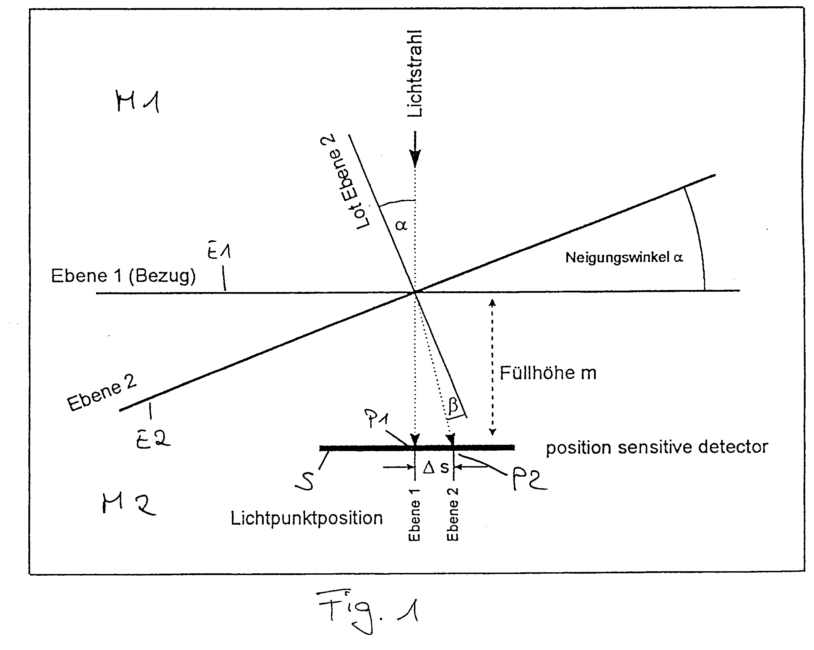

In Figur 1 ist das physikalische Prinzip der Vorrichtung zur Bestimmung eines Neigungswinkels ($\alpha$) dargestellt.

Die Ebene E1 in Figur 1 stellt eine Bezugsebene dar, die relativ zu einem (nicht dargestellten) betrachteten Gegenstand ortsfest ist. Ebenfalls ortsfest zu dem Gegenstand ist die Meßfläche eines optoelektronischen Detektors S als Teil einer Auswerteeinrichtung angebracht und eine ebenfalls nicht dargestellte Lichtquelle, die einen Lichtstrahl aussendet, und zwar relativ zum Gegenstand stets in die gleiche Richtung. Es sind zwei Medien M1 und M2 mit unterschiedlichen Brechzahlen $n_1$, $n_2$ vorgesehen. Das erste Medium M1 ist hier vorzugsweise Luft, das zweite Medium M2 eine Flüssigkeit. Die zweite dargestellte Ebene E2 bildet die Grenzschicht zwischen den beiden Medien M1,M2, die von dem Lichtstrahl passiert wird.

Die Ausrichtung der Grenzschicht E2 fällt hier in der (nicht dargestellten) Ruhelage des Gegenstandes mit der Ausrichtung der Bezugsebene E1 zusammen, und der Lichtstrahl wird lotrecht zur Bezugsebene E1 eingestrahlt. Diese Bedingungen wurden der einfachen Darstellung halber gewählt, stellen aber keine notwendigen Voraussetzungen für die Vorrichtung ist. In der Ruhelage trifft der die Grenzschicht E2 lotrecht passierende Lichtstrahl dann ohne Ablenkung ebenfalls lotrecht an dem Auftreffpunkt P1 auf die Meßfläche des Detektors S auf, wenn diese Meßfläche ebenfalls die gleiche Ausrichtung besitzt wie die Bezugsebene E1.

In der dargestellten Situation ist die Bezugsebene E1 des Gegenstands um einen Neigungswinkel $\alpha$ aus seiner Ruhelage geneigt. Die Grenzschicht zwischen den beiden Medien M1,M2, die stets bestrebt ist, die Waagerechte einzunehmen, verbleibt von außen betrachtet in seiner ursprünglichen Ausrichtung. Vom Gegenstand aus gesehen, neigt sich die Grenzschicht E2 jedoch relativ zu der Bezugsebene E1 um den Winkel $\alpha$, der nach den obigen Annahmen gleich dem Neigungswinkel ($\alpha$) ist. Der Lichtstrahl, der relativ zum Gegenstand und zu der Bezugsebene E1 weiterhin in gleicher Richtung abgestrahlt wird, trifft auf die Grenzschicht E2 mit einem Winkel, der um den Neigungswinkel $\alpha$ von dem Lot der Grenzschicht E2 abweicht. Nach dem Passieren der Grenzschicht E2 verläuft der Lichtstrahl mit einem Ausfallwinkel von $\beta$, also einem Winkel, der um $\beta$ von dem verlängerten Einfallslot der Grenzschicht E2 abweicht, wobei der Winkel $\beta$ von dem Verhältnis der Brechzahlen n1,n2 zwischen dem ersten Medium M1 und dem zweiten Medium M2 abhängt. Die Position des Auftreffpunkts P2 des Lichtstrahls auf der Meßfläche des Detektors S weicht in Abhängigkeit von dem Winkel $\beta$ und von der Füllhöhe m des zweiten Mediums M2 um $\Delta s$ von dem ersten Auftreffpunkt P1 ab.

Dabei gilt nach dem Brechungsgesetz für den Übergang von einem ersten Medium M1 mit Lichtgeschwindigkeit $c_1$ und Brechzahl $n_1$ in ein zweites Medium M2 mit Lichtgeschwindigkeit $c_2$ und Brechzahl $n_2$:

$$\frac{\sin \alpha}{\sin \beta} = \frac{c_1}{c_2} = \frac{n_2}{n_1}$$

Im folgenden sei angenommen, daß das erste Medium M1 Luft ist. Da sich die Lichtgeschwindigkeit in der Luft $c_0$ von der im Vakuum $C_{Luft}$ nur um 0,3 ‰ unterscheidet, kann auch bei einem Übergang aus der Luft in ein zweites Medium M2 mit der auf das Vakuum bezogenen Brechzahl $n = n_2$ gerechnet werden. Für den Übergang vom Vakuum in ein Medium M2 gilt dann:

$$\frac{\sin \alpha}{\sin \beta} = \frac{c_0}{c} = n$$

Damit erhält man bei einem ersten Medium M1 Luft für den Abweichungswinkel $\beta$ im zweiten Medium M2:

$$\beta = \arcsin\left(\frac{1}{n} {}^* \sin \alpha\right)$$

Für eine Füllhöhe m des Mediums M2 ergibt sich für die Änderung der Lichtpunktposition $\Delta s$ bei einem Neigungswinkel $\alpha$ des Gegenstandes:

$$\Delta s = m^* \tan(\alpha - \beta)$$

Somit erhält man für den Zusammenhang zwischen $\Delta s$ und $\alpha$:

$$\Delta s = m^* \tan\left(\alpha - \arcsin\left(\frac{1}{n}{}^*\sin\,\alpha\right)\right).$$

Allgemein gilt für zwei Medien M1,M2 mit Brechzahlen $n_1$ bzw. $n_2$ für den Zusammenhang zwischen $\Delta s$ und $\alpha$ analog:

$$\Delta s = m^* \tan\left(\alpha - \arcsin\left(\frac{n_1}{n_2}{}^*\sin\,\alpha\right)\right)$$

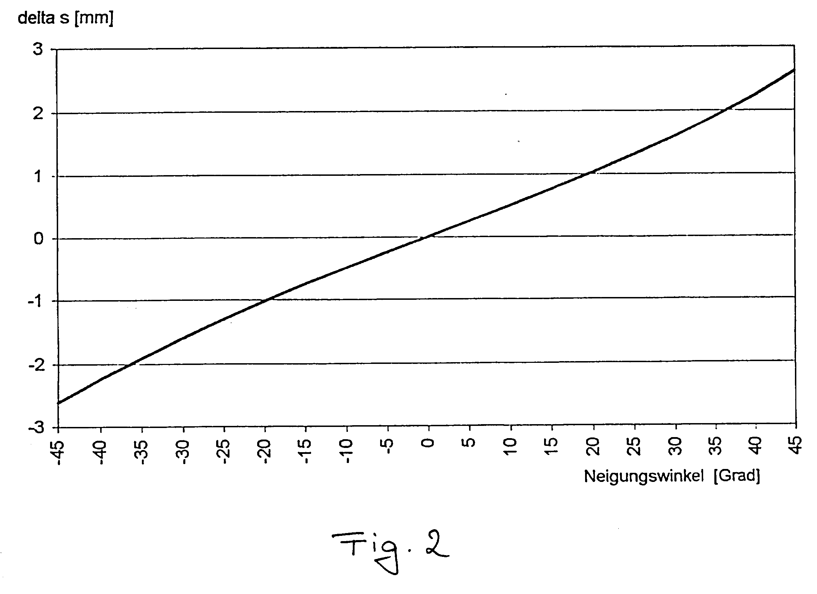

Figur 2 zeigt den Verlauf dieser Änderung $\Delta s$ der Auftreffpunkte (P1 → P2) eines Lichtstrahls, aufgetragen über dem Neigungswinkel $\alpha$ der Bezugsebene des Gegenstandes bei einer Brechzahl von n = 1,4 und einer Füllhöhe des Mediums M2 von m = 10mm.

In einer Auswerteeinheit kann aus den vom Detektor S erfaßten Auftreffpunkten leicht der Neigungswinkel $\alpha$ des Gegenstandes ermittelt werden, indem zunächst die Differenz $\Delta s$ zwischen den zwei Auftreffpunkten P1,P2 ermittelt und anschließend der der Differenz $\Delta s$ entsprechende Neigungswinkel $\alpha$ bestimmt wird.

Trifft der Lichtstrahl die Grenzschicht E2 in der Ruhelage der Bezugsebene E1 des Gegenstandes nicht lotrecht, so muß diese Abweichung in der Bestimmung des Neigungswinkels $\alpha$ mit berücksichtigt werden, da dann die Abweichung des Einfallswinkels vom Einfallot nicht dem Neigungswinkel $\alpha$ gleichgesetzt werden kann.

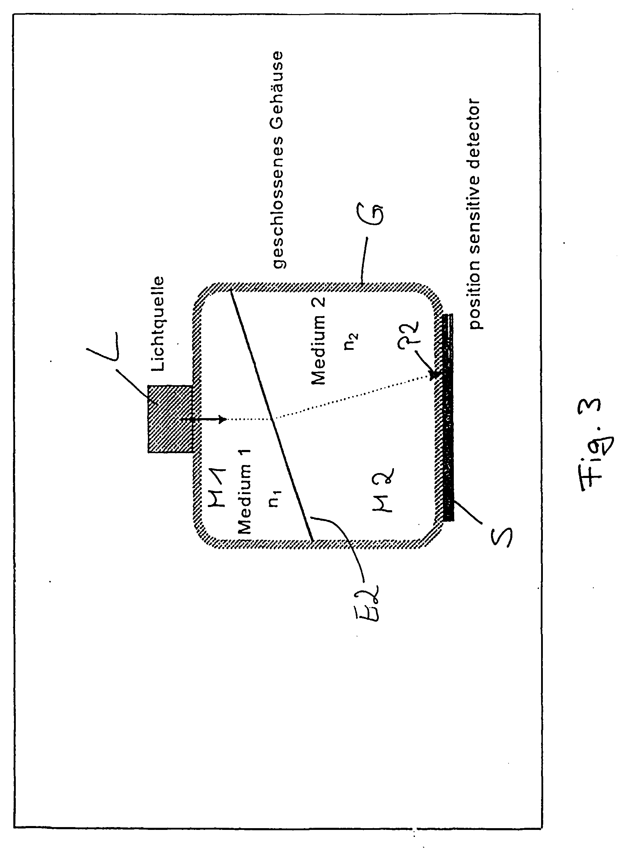

Figur 3 schließlich zeigt ein Ausführungsbeispiel gemäß der Erfindung.

Ein Glaskolben wird für die Vorrichtung als geschlossenes Gehäuse G verwendet. Das Gehäuse ist mit zwei Medien M1,M2 gefüllt, die eine Brechzahl von $n_1$ bzw. $n_2$ aufweisen, wobei das zweite Medium M2 das optisch dichtere ist. Dadurch vermeidet man eine Totalreflexion bei zu großen Einfallswinkeln. Zwischen den beiden Medien verläuft eine Grenzschicht E2.

Auf der Oberseite des Gehäuses G ist eine nicht divergente Lichtquelle L angebracht, die von einer low cost LED mit Linse gebildet wird. An der Unterseite des Gehäuses G ist eine Lateraleffektdiode (position sensitive sensor, PDS) S angebracht, die über eine ebene Oberfläche verfügt, die mit der Gehäuseunterseite abschließt.

Die Lichtquelle L strahlt einen Lichtstrahl in das Gehäuse G ab. Unter der Voraussetzung, daß die innere und die äußere Oberfläche des Gehäuses an der Stelle des Lichtdurchgangs planparallel verlaufen, ergibt sich für den Lichtstrahl lediglich eine konstante Parallelverschiebung, die eine für die Auswertung nicht relevante Vorrichtungskonstante darstellt und damit vernachlässigbar ist.

Befindet sich die Bezugsebene des Gegenstandes, mit dem das Gehäuse verbunden ist, in Ruheposition, so verläuft die Grenzschicht zwischen dem ersten und dem zweiten Medium M1,M2 parallel zur oberen und zur unteren Begrenzungswand des Gehäuses G. Für eine möglichst einfache Auswertung wird der Lichtstrahl von der Lichtquelle stets so eingestrahlt, daß er lotrecht zu der Grenzschicht verläuft, wenn die Bezugsebene E1 des Gegenstands sich in der Ruhelage befindet. In diesem Fall verläuft der Lichtstrahl vom Eintritt in das Gehäuse G auf direktem Weg bis zum Austritt aus dem Gehäuse G ohne Ablenkung an der Grenzschicht, wenn sich der Gegenstand in der Ruhelage befindet.

Wird die Bezugsebene des Gegenstandes geneigt, so bewegt sich die Grenzschicht E2 von außen betrachtet in ihrer Ausrichtung nicht. Vom Gehäuse G aus betrachtet bewegt sie sich jedoch um den Winkel $\alpha$, um den auch die Bezugsebene des Gehäuses aus ihrer Ruhelage geneigt wird.

Da der Lichtstrahl vom Gehäuse G aus betrachtet weiterhin in die gleiche Richtung abgestrahlt wird, trifft er nun mit dem gleichen Winkel $\alpha$ von dem Lot der Grenzschicht E2 abweichend auf die Grenzschicht E2 auf, wobei dieser Winkel eine Funktion der Neigung der Bezugsebene ist. Aufgrund der unterschiedlichen Brechzahlen der Medien M1 und M2 erfährt der Lichtstrahl eine Ablenkung an der Grenzschicht E2, und zwar um einen Winkel $\alpha-\beta$, so daß der Lichtstrahl im zweiten Medium um $\beta$ von dem Lot der Grenzschicht E2 abweicht.

Der Lichtstrahl trifft in einem zweiten Punkt P2 auf der Oberfläche des Detektors S auf, der einen Abstand $\Delta s$ von dem Auftreffpunkt des Lichtstrahls in Ruhelage besitzt.

Mit den festen Systemparametern der Vorrichtungsgeometrie erfolgt die Verarbeitung der erfaßten Werte mit Hardwareschaltungen, Mikroprozessor und Software entsprechend dem Stand der Technik. Als Basis der Bestimmung des Neigungswinkels werden die geometrischen und physikalischen Größen der Vorrichtung, wie Brechzahlen und Füllhöhe m des zweiten Mediums M2, als konstant und bekannt vorausgesetzt.

Eine Auswerteeinheit, von der der Detektor S den einzigen dargestellten Teil bildet, berechnet die Differenz $\Delta s$ zwischen den Auftreffpunkten in zwei verschiedenen Neigungspositionen der Bezugsebene des Gegenstandes und ermittelt daraus anhand einer vorgegebenen Funktionalität zwischen Differenz $\Delta s$ und Neigungswinkel $\alpha$ oder anhand einer gespeicherten Tabelle den dazugehörigen Neigungswinkel $\alpha$.

Wird als Detektor S eine Fotodiode verwendet, die zweidimensional ausgelegt ist, so ist der Neigungswinkel ($\alpha$) in die zwei Richtungen eines Koordinatensystems, das in der Bezugsebene E1 des Gegenstandes festgelegt wird, mit einer einzigen Lichtquelle meßbar. Die Auswerteeinheit muß lediglich die Differenz von Auftreffpunkten in zwei Richtungen des Koordinatensystems in der Erfassungsebene berechnen und daraus die entsprechenden Neigungswinkel bestimmen. Aus den Neigungswinkeln in zwei zueinander orthogonalen Richtungen kann dann auch ein Gesamtneigungswinkel bestimmt werden.

## Patentansprüche

1. Vorrichtung zur Bestimmung des Neigungswinkels (α) einer Bezugsebene (E1) eines Gegenstandes, insbesondere eines Kraftfahrzeuges, gegenüber einer Referenzebene, bestehend aus einem gegenüber dem Gegenstand ortsfestes Gehäuse (G), welches zwei lichtdurchlässige Medien (M1,M2) mit unterschiedlichen Brechzahlen (n1,n2) einschließt, die durch eine neigungsabhängige Grenzschicht (E2) voneinander getrennt sind, einer Lichtquelle (L) zur Erzeugung eines die Grenzschicht (E2) passierenden Lichtstrahls, welcher in einer relativ zu der Bezugsebene (E1) festgelegten Richtung abgestrahlt wird, und aus einer Auswerteeinheit zur Erfassung der Auslenkung (Δs) des Lichtstrahls nach dessen Durchgang durch die Grenzschicht (E2) und zur Bestimmung des Neigungswinkels (α) daraus.

2. Vorrichtung nach Anspruch 1,
**dadurch gekennzeichnet**, daß die Auswerteeinheit über Mittel verfügt zum Berechnen des Neigungswinkels (α) aus der erfaßten Ablenkung (Δs) des Lichtstrahls nach der Gleichung

$$\Delta s = m^* \tan\left(\alpha - \arcsin\left(\frac{n_1}{n_2}^* \sin \alpha\right)\right),$$

wobei m den Abstand zwischen dem Punkt, an dem der Lichtstrahl die Grenzschicht E2 durchquert, und der Projektion dieses Punktes auf den Erfassungsort bezeichnet.

3. Vorrichtung nach Anspruch 1 oder 2,
**dadurch gekennzeichnet**, daß die Auswerteeinheit zum Bestimmen des Neigungswinkels (α) aus der Ablenkung (Δs) eine Tabelle mit einer Vielzahl von möglichen Werten für die Ablenkungen (Δs) sowie jeder Ablenkung zugeordneten Neigungswinkeln gespeichert hat.

4. Vorrichtung nach einem der vorangehenden Ansprüche,
**dadurch gekennzeichnet**, daß das erste Medium (M1) Luft und das zweite Medium (M2) eine Flüssigkeit ist.

5. Vorrichtung nach Anspruch 4,
**dadurch gekennzeichnet**, daß die Flüssigkeit in einem geschlossenen Behälter (B), insbesondere in einem Glasbehälter, untergebracht ist.

6. Vorrichtung nach einem der Ansprüche 1-3,
**dadurch gekennzeichnet**, daß das zweite Medium (M2) einen festen Aggregatzustand besitzt und sich der Neigung entsprechend ausrichtend gelagert ist.

7. Vorrichtung nach einem der vorangehenden Ansprüche,
**dadurch gekennzeichnet**, daß die Lichtquelle (L) eine LED mit Linse oder eine Laserdiode beinhaltet.

8. Vorrichtung nach einem der vorangehenden Ansprüche,
**dadurch gekennzeichnet**, daß die Auswerteeinheit zum Erfassen der Auslenkung (Δs) einen optoelektronischen Detektor (S) umfaßt, der von einer Lateraleffektdiode (Fotodiode) gebildet wird.

9. Vorrichtung nach einem der vorangehenden Ansprüche,
**dadurch gekennzeichnet**, daß die Auswerteeinheit zum Erfassen der Auslenkung (Δs) eine zweidimensional erfassende Fotodiode als einen optoelektronischen Detektor (S) umfaßt.

10. Vorrichtung nach einem der vorangehenden Ansprüche,
**dadurch gekennzeichnet**, daß die Auswerteeinheit mit einer Alarmanlage verbunden ist zur Auslösung eines Alarms bei Überschreiten eines vorbestimmten Neigungswinkels.

11. Vorrichtung nach einem der vorangehenden Ansprüche,
**dadurch gekennzeichnet**, daß sie Steuermittel umfaßt, die Lichtquelle (L) und Auswerteeinrichtung derart steuern, daß eine spontane Erfassung und Auswertung bei Bedarf erfolgt.

Fig. 1

Fig. 2

7

Fig. 3